# EUROPÄISCHE PATENTSCHRIFT

(11) **EP 1 438 486 B1**
(45) Veröffentlichungstag und Bekanntmachung des Hinweises auf die Patenterteilung: **29.11.2006**
(21) Anmeldenummer: 02765291.6
(22) Anmeldetag: 18.10.2002
(51) Int. Cl.: F01D 25/32, F02C 7/052, B01D 45/02, B01D 45/08

(54) **VORRICHTUNG ZUR AUSFILTERUNG VON PARTIKELN AUS EINER KÜHLMITTELSTRÖMUNG IN EINER STRÖMUNGSMASCHINE**
DEVICE FOR FILTERING PARTICLES OUT OF A COOLANT FLOW IN A TURBO MACHINE
DISPOSITIF D'EXTRACTION PAR FILTRATION DE PARTICULES CONTENUES DANS UN FLUX DE FLUIDE DE REFROIDISSEMENT DANS UNE TURBOMACHINE

(30) Priorität: 23.10.2001 CH 194901
(43) Veröffentlichungstag der Anmeldung: 21.07.2004
(73) Patentinhaber: Alstom Technology Ltd, 5400 Baden (CH)
(72) Erfinder: ANDERSON, Gordon, CH-5400 Baden (CH); KÖNIG, Marcel, CH-5430 Wettingen (CH)
(86) Internationale Anmeldenummer: PCT/IB2002/004332
(87) Internationale Veröffentlichungsnummer: WO 2003/036051

(56) Entgegenhaltungen:
- GB-A- 2 270 481
- GB-A- 2 342 124
- US-A- 796 429
- US-A- 890 537

## Beschreibung

### Technisches Anwendungsgebiet

Die vorliegende Erfindung betrifft eine Vorrichtung zur Ausfilterung von Partikeln aus einer Strömung, gemäss dem Oberbegriff des Anspruchs 1

Eine ausreichende und zuverlässige Kühlung von Komponenten einer Strömungsmaschine stellt einen wesentlichen Aspekt für den Betrieb der Strömungsmaschine dar. Moderne Hochtemperaturgasturbinen erfordern zur Erzielung eines hohen Wirkungsgrades ein ausgeklügeltes Kühlsystem, insbesondere zur Kühlung der hochbelasteten Turbinenschaufeln. Die Turbinenschaufeln sind daher mit Kühlkanälen bzw. Kühlkanäle bildenden Hohlräumen durchsetzt, durch die während des Betriebes der Anlage ein Kühlmedium, insbesondere Kühlluft, strömt. Im Anströmbereich der Turbinenschaufeln an deren Vorderkante sind in der Regel zahlreiche Kühlluftbohrungen vorgesehen, durch die das Kühlmedium vom Inneren der Schaufel nach außen treten kann. Auf der Oberfläche bildet sich in diesem Bereich ein Kühlluftfilm, der die Turbinenschaufel vor einer zu starken Erwärmung schützt. In gleicher Weise sind entsprechende Kühlluftbohrungen auch an der Hinterkante, der Druck- und der Saugseite der Turbinenschaufel sowie an anderen Komponenten der Strömungsmaschine vorhanden.

Die Kühlluft wird den Kühlkanälen über ein oder mehrere Zufuhrkanäle zugeführt, die beispielsweise durch einen zwischen der Brennkammer und dem Außengehäuse der Strömungsmaschine vorhandenen ringförmigen Zwischenraum gebildet sein können. In der Regel handelt es sich bei dem Kühlmedium um einen Teil der von der Kompressorstufe komprimierten oder an dieser vorbei geleiteten Luft.

Ein Problem beim Betrieb eines derartigen Kühlsystems einer Strömungsmaschine stellt die Verstopfung der Kühlkanäle oder Kühlluftbohrungen durch Schmutz- oder Staubpartikel dar, die aus der Atmosphäre oder von stromauf der Kühlkanäle gelegenen Komponenten der Strömungsmaschine stammen können und mit dem Kühlmedium in die Kühlkanäle eingebracht werden. Eine Verstopfung einzelner Kühlkanäle oder Kühlluftbohrungen kann zu einer erheblichen Erhöhung der lokalen Temperaturbelastung der zu kühlenden Komponente bis zu deren Beschädigung führen. Diese Problematik wird zusätzlich dadurch verschärft, dass die Kühlluftbohrungen zur Effizienzsteigerung der Kühlsysteme zunehmend kleiner ausgebildet werden, so dass sie noch leichter verstopfen können.

### Stand der Technik

Zur Verminderung der Verstopfungsgefahr von Kühlkanälen oder Kühlluftbohrungen ist es bekannt, zusätzliche Staubaustragsöffnungen an Kühlkanalumlenkungen vorzusehen. Über diese Staubaustragsöffnungen werden im Kühlmedium mitgeführte Partikel aufgrund ihrer Trägheit aus dem Kühlkreislauf ausgetragen, so dass eine Verstopfung der stromab liegenden Kühlkanalbohrungen durch diese Partikel verhindert wird.

Ein Beispiel für eine Ausgestaltung einer Turbinenschaufel mit derartigen Staubaustragsöffnungen ist beispielsweise der US 4,820,122 zu entnehmen. Das Innere der Turbinenschaufel weist hierbei serpentinenartig verlaufende Kühlluftkanäle auf. Die Verzweigung in die einzelnen Kanäle erfolgt bereits im Bereich des Eintritts des Kühlmediums in die Turbinenschaufel am Rotor. In direkter Verlängerung des Eintrittskanals erstreckt sich radial ein geradliniger Kanal, der direkt zu einer Staubaustragsöffnung an der Schaufelspitze führt. Die mit der Kühlluft eintretenden Partikel werden aufgrund ihrer Trägheit direkt geradlinig radial zu dieser Staubaustragsöffnung befördert, während annähernd schmutzfreie Kühlluft problemlos in die anderen serpentinenartigen Kanäle eintreten kann. Die Schmutzpartikel werden somit durch diese Staubaustragsöffnung aus dem Kühlsystem ins Freie geführt, so dass die Kühlluftbohrungen nicht von den Schmutzpartikeln verstopft werden können.
Ein Nachteil dieser Technik besteht jedoch darin, dass durch die Staubaustragsöffnungen auch ein Teil des Kühlmediums austritt, so dass bei diesem System ein unerwünschter Verlust an Kühlmedium im Kühlkreislauf auftritt.

Weiterhin ist es bekannt, Separatoren wie beispielsweise Zyklone innerhalb des Kühlsystems anzuordnen, die Schmutz- oder Staubpartikel vom Kühlmedium zu trennen. In diesen Separatoren werden Wirbel im Kühlmedium erzeugt, durch die die Staub- und Schmutzpartikel aufgrund ihrer Trägheit vom Kühlmedium abgetrennt werden können.

Ein Nachteil dieser Separatoren besteht darin, dass sie zusätzlichen Bauraum beanspruchen, der in Kühlsystemen für bestimmte zu kühlende Komponenten nicht verfügbar ist. Separatoren werden daher häufig für Anwendungen eingesetzt, bei denen die Kühlluft aus dem inneren Bereich der Strömungsmaschine herausgeführt, außerhalb des inneren Bereiches in dem Separator gereinigt und anschließend zur Erfüllung der Kühlfunktion in den inneren Bereich zurück geführt werden kann. Zyklone verursachen außerdem einen beträchtlichen Druckverlust und erfordern zudem eine zusätziche Reinigungsstufe.

JP 60-205126 gibt eine Vorrichtung an, bei der ein Abströmkanal mit einem Verlängerungselement in einen Zuströmkanal hineinragt. Dabei ist der Strömungsquerschnitt des Zuströmkanals an der Stelle der Mündung des Verlängerungselementes grösser bemessen als der Strömungsquerschnitt des Verlängerungselementes. Dadurch kommt es zu einer lokalen Beschleunigung der Strömung, und schwere Staubteilchen, welche ein geringes Strömungsfolgevermögen aufweisen, treten in vermindertem Ausmasse in den Abströmkanal ein. Aufgrund der direkten und nur gering gekrümmten Einströmung in das Verlängerungselement ist jedoch noch immer mit einem nicht unter allen Umständen zu vernachlässigenden Staubeintrag in den Abströmkanal zu rechnen; beispielsweise ist bei den genannten Anwendungen zur Staubseperation in Kühlluft je nach dem Ort der Verwendung der gereinigten Kühlluft von einer eigentlichen Nulltoleranz an Staubpartikeln auszugehen.

Aus GB 2 342 124 und GB 2 270 481 sind Vorrichtungen bekannt geworden, bei denen ein Verlängerungselement eines Abströmkanals in einen Zuströmkanal hineinragt. Stromauf dem freien Ende des Verlängerangselementes ist ein Element angeordnet, welches die Zuströmung verdrallt und eine schraubenlinienförmige Strömung induziert. Eine geradlinige Zuströmung in das Verlängerungselement ist somit unterbunden. Durch eine Verdrallung werden aber Druckverluste hervorgerufen.

US 796, 429 beschreibt eint Vorrichtung zur Abscheidung in Feuchte aus Dampf. Zur Tropfenseparation ist ein Verlängerungselement eines Abströmkanals mit einem haubenformigen Abdeckelement verschlossen. Die Zuströmung in das Verlängerungselement erfolgt durch seitliche Öffnungen. Es steht nicht der gesamte Querschnitt des Verlängerungselementes als Strömungsquerschnitt zur Verfügung.

### Darstellung der Erfindung

Ausgehend von diesem Stand der Technik besteht die Aufgabe der vorliegenden Erfindung darin, eine Vorrichtung zur Ausfilterung von Partikeln aus einer Strömung gemäss dem Oberbegriff des Anspruchs 1 anzugeben, welche die Nachteile des Standes der Technik vermeidet, und die insbesondere beim Einsatz in einem Kühlsystem einer Strömungsmaschine die Gefahr einer Verstopfung der Kühlkanäle oder Kühlluftbohrungen durch Schmutz- oder Staubpartikel verringert, keinen zusätzlichen Bauraum in der Strömungsmaschine beansprucht und - zumindest in einer Betriebsweise der Vorrichtung - keinen Verlust an Kühlmedium oder Luftdruck hervorruft.

Die Aufgabe wird mit der Vorrichtung gemäß Patentanspruch 1 gelöst. Vorteilhafte Ausgestaltungen der Vorrichtung sind Gegenstand der Unteransprüche.

Die vorliegende Vorrichtung zur Ausfilterung von Partikeln aus einer Strömung weist einen Zuströmkanal für den Einlass und wenigstens einen in den Zuströmkanal mündenden Abströmkanal für den Auslass der Strömung auf, wobei der Abströmkanal am Übergang vom Zuströmkanal ein kanalförmiges Verlängerungselement aufweist, welches sich mit seinem freien Ende in den ersten Kanal hinein erstreckt. Die vorliegende Vorrichtung zeichnet sich dadurch aus, dass an dem in den Zuströmkanal hineinragenden freien Ende des Verlängerungselementes ein Abdeckelement angeordnet ist welches die stirnseitige Einströmöffnung des kanalförmigen Verlängerungselementes an der Stirnseite des freien Endes überdeckt.

Das Abdeckelement ist in axialer Richtung des Verlängerungselementes von der Stirnseite des Verlängerungselementes beabstandet angeordnet. Es wird dann zwischen dem Abdeckelement und dem Verlängerungselement ein Spalt gebildet, in den eine Strömung nur auf einem schikanenförmigen Strömungsweg gelangen kann.

In einer vorteilhaften Weiterbildung der Erfindung weist das Verlängerungselement wenigstens eine seitlich angeordnete Eintrittsöffnung für das Strömungsmedium auf.

Das Abdeckelement ist haubenförmig ausgebildet ist und überdeckt das Verlängerungselement axial wenigstens teilweise. Dies ist gerade dann wirkungsvoll, wenn sich die axiale Überdeckung des haubenförmigen Abdeckelementes über die fakultativen seitlichen Eintrittsöffnungen erstreckt. Die haubenförmige Ausbildung des Abdeckelementes mit einer axialen Überdeckung des Verlängerungselementes erfordert eine noch stärkere Krümmung der Bewegungsbahn von mit dem strömenden Medium herangebrachten Partikeln, um in die Eintrittsöffnung des Verlängerungselementes eintreten zu können. Durch diese Ausgestaltung wird eine zusätzliche Reduzierung des Eintrags von Staub- oder Schmutzpartikeln in den Abströmkanal erreicht, da diese Partikel aufgrund ihrer Trägheit die stark gekrümmte Bewegungsbahn, durch die sie in die Eintrittsöffnungen des Verlängerungselementes gelangen könnten, nicht nachvollziehen können.

Kern der Erfindung ist es also, durch die Anordnung des Abdeckelementes eine geradlinige Einströmung in das Verlängerungselement und damit in den Abströmkanal für gereinigtes Medium zu verhindern, und, je nach Ausführungsform, starke Strömungsumlenkungen bis hin zu einer labyrinthförmigen Strömung zu erzwingen. Damit können, wenn überhaupt, nur noch kleinste Aerosole in den Abströmkanal eindringen. Der Separationseffekt wird umso stärker, je ausgeprägter die Strömungsumlenkungen sind. Dabei verursacht die erfindungsgemässe Separationsvorrichtung vergleichsweise sehr geringe Druckverluste.

Besonders einfach lässt sich diese Vorrichtung ausführen, wenn der Abströmkanal und/oder das Verlängerungselement einen kleineren Strömungsquerschnitt als der Zuströmkanal aufweisen. In einer bevorzugten Ausführungsform ist der Strömungsquerschnitt des Verlängerungselementes über dessen gesamte axiale Erstreckung konstant, und bevorzugt gleich dem Strömungsquerschnitt des Abströmkanals. Ebenfalls weisen beide bevorzugt eine identische Strömungskanalgeometrie auf. Es ist weiterhin von Vorteil, wenn der Abströmkanal für gereinigtes Medium und das Verlängerungselement koaxial verlaufen.

In einer Ausführungsform der Erfindung bildet der Zuströmkanal eine Expansionskammer aus, und das Verlängerungselement ragt in die Expansionskammer hinein.

Durch diese Ausgestaltung der vorliegenden Vorrichtung wird erreicht, dass ein großer Anteil der in der Strömung vorhandenen Schmutz- oder Staubpartikel nicht in die zweiten Kanäle einströmt, sondern sich aufgrund der Trägheit dieser Partikel in einem die Eintrittsöffnungen der zweiten Kanäle umgebenden Bereich, der zwischen dem kanalförmigen Verlängerungselement und der Wandung des ersten Kanals gebildet wird, ansammelt oder, in einer bevorzugten Ausgestaltung, von dort über ein oder mehrere weitere Abströmkanäle für staubbeladenes Medium abgezogen wird.
In dieser bevorzugten Ausführungsform zweigt, mit Vorteil in einem Bereich axialer Überdeckung des Zuströmkanals und des Verlängerungselementes, wenigstens ein weiterer Abströmkanal von dem Zuströmkanal ab, der bündig mit der Wand des Zuströmkanals in diesen mündet. Dies ermöglicht es, dass die Staub- oder Schmutzpartikel über diese Kanäle abgezogen werden. Vorzugsweise führen die Abströmkanäle für staubbeladenes Medium - beim Einsatz der Vorrichtung in einem Kühlsystem einer Strömungsmaschine - zu weiteren Kühlkanälen, beispielweise zur Kühlung der Brennkammer, die nicht zur Verstopfung durch im Kühlmedium enthaltende Staub- oder Schmutzpartikel neigen, also unempfindlich gegen diese Partikel sind. Auf diese Weise geht kein Kühlmedium aus dem Kühlsystem verloren; alles über den Zuströmkanal zugeführte Medium wird der Kühlung zugeführt. Die Abzweigung weiterer Abströmkanäle ist bevorzugt in einem Bereich des Zuströmkanals angeordnet, über den sich das Verlängerungselement in axialer Richtung erstreckt bzw. das Verlängerungselement sollte eine entsprechende Länge aufweisen.

Eine erfindungsgemässe Ausgestaltung bietet sich beim Übergang zwischen dem Zufuhrkanal oder Zufuhrplenum, insbesondere dem bei einer Gas- und/oder Dampfturbinenanlage zwischen der Brennkammer und dem Außengehäuse liegenden Zwischenraum, und den einzelnen Kühlkanälen einer Strömungsmaschine an. Selbstverständlich können derartige Verlängerungselemente auch an anderen Stellen des Kühlsystems vorgesehen sein, an denen ein erster Kanal größeren Strömungsquerschnitts in einen zweiten Kanal kleineren Strömungsquerschnittes übergeht. Dabei kann der Querschnittsübergang auch durchaus beim Übergang von einer im Strömungsweg angeordneten Expansionskammer in einen stromab folgenden Strömungskanal gebildet sein; der Kanalquerschnitt stromauf der Expansionkammer ist dann vollkommen unerheblich.

Die bei der vorliegenden Vorrichtung realisierte Maßnahme zur Reduzierung des Eintrags von Staub- oder Schmutzpartikeln mit der Strömung hat den besonderen Vorteil, dass sie bei Integration in einer Strömungsmaschine keinerlei zusätzlichen Raum innerhalb der Strömungsmaschine beansprucht. Es wird lediglich der bereits vorhandene Raum bzw. das bereits vorhandene Plenum des Kanals mit größerem Strömungsquerschnittes ausgenutzt. Weiterhin wird durch die erfindungsgemäß vorgesehenen Verlängerungselemente kein wesentlicher Druckabfall im Kühlsystem verursacht.

Ein Verlängerungselement ist vorzugsweise röhrenförmig entsprechend der Querschnittsform des wenigstens einen Abströmkanals für gereinigtes Medium ausgebildet. Vorzugsweise weist ein Verlängerungselement über die gesamte Länge den gleichen Strömungsquerschnitt auf. Selbstverständlich lassen sich jedoch auch Abweichungen hiervon realisieren, wie beispielsweise eine leicht trichterförmige Ausbildung des Verlängerungselementes, solange die gewünschte staub- bzw. schmutzreduzierende Wirkung noch erreicht wird.

Die Erfindung ist insbesondere zur Ausfilterung und Separation von Partikeln aus einer gasförmigen Strömung geeignet.

### Kurze Beschreibung der Zeichnungen

Die vorliegende Vorrichtung wird nachfolgend ohne Beschränkung des allgemeinen Erfindungsgedankens in einem Kühlsystem einer Strömungsmaschine anhand von Ausführungsbeispielen in Verbindung mit den Figuren verdeutlicht. Hierbei zeigen:
- Fig. 1: ein erstes Beispiel für eine Ausführung der Erfindung;
- Fig. 2: ein weiteres Beispiel für eine erfindungsgemässe Vorrichtung;
- Fig. 3: ein Beispiel für die Realisierung der vorliegenden Vorrichtung im Kühlsystem einer Gasturbinenanlage.

### Wege zur Ausführung der Erfindung

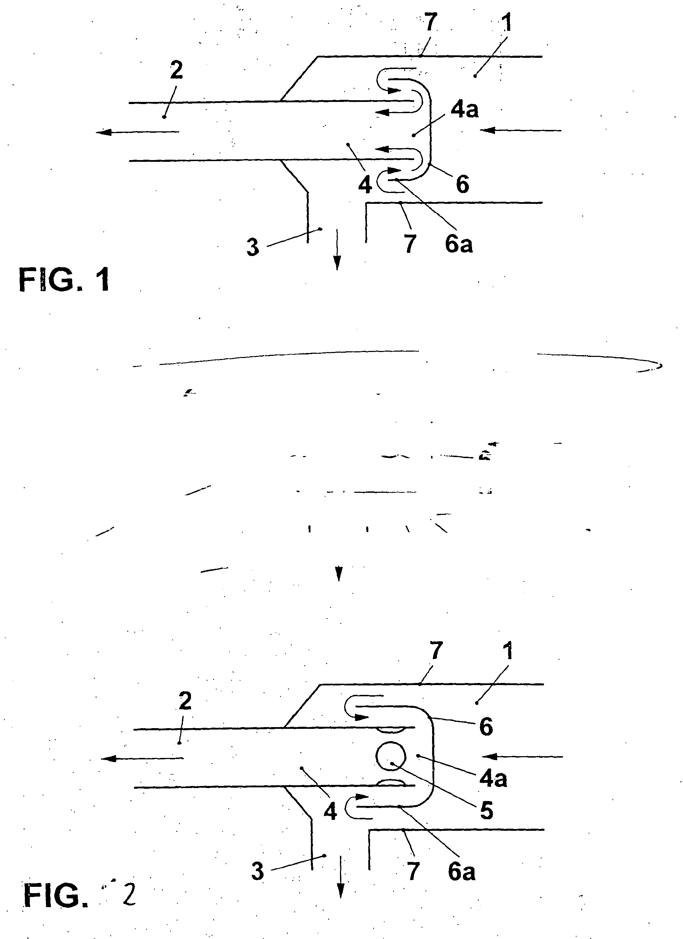

Figur 1 zeigt ein erstes Ausführungsbeispiel für eine erfindungsgemässe Vorrichtung. Beispielsweise handelt es sich um einen stark schematisierten Ausschnitt aus dem Kühlsystem einer Gasturbine. Ein Zuströmkanal 1 ist in einer Maschine beispielsweise als ringförmiger Zwischenraum zwischen der Brennkammerwand und dem Maschinengehäuse ausgebildet, der in der Figur stark schematisiert im Schnitt dargestellt ist. Die Vorrichtung wird bestimmungsgemäss in Richtung der eingezeichneten Pfeile durchströmt. Durch den Zuströmkanal 1 wird der Vorrichtung ein partikelbeladener Medienstrom zugeführt. In dem Zuströmkanal 1 münden wenigstens ein Abströmkanal 2, und wenigstens ein weiterer Abströmkanal 3. Der weitere Abströmkanal 3 mündet im wesentlichen bündig mit der Wand 7 des Zuströmkanals 1 in diesen. Der erste Abströmkanal 2 ist ein Abströmkanal für gereinigtes Medium. Er weist ein Verlängerungselement 4 auf, das in den Zuströmkanal 1 hineinragt. Dabei wird die Mündung des weiteren Abströmkanals 3 für staubbeladenes Medium von dem Verlängerungselement 4 mit Vorteil axial überdeckt. Das Verlängerungselement 4 weist an seinem freien Ende eine stirnseitige Einströmöffnung 4a auf. Diese wird von einem Abdeckelement 6 überdeckt. In der dargestellten bevorzugten Ausführungsform ist das Abdeckelement 6 haubenförmig mit seitlichen Erstreckungselementen 6a ausgebildet. Dies muss gemäss der Erfindung nicht zwangsläufig so sein; erfindungsgemäss genügt eine ebene Platte als Abdeckelement prinzipiell vollkommen für den angestrebten Effekt. Wenn das Abdeckelement aber haubenförmig ausgebildet ist und mit den Erstreckungselementen 6a eine wenigstens teilweise axiale Überdeckung mit dem Verlängerungselement 4 aufweist, wird der Separationseffekt verbessert. Erkennbar ist, dass aufgrund der Ausbildung der vorliegenden Konfiguration eine Medienströmung einen schikanenförmigen Strömungsweg einschlagen muss, um durch die stirnseitige Einströmöffnung 4a in den Abströmkanal für gereinigtes Medium 2 zu gelangen. Nur Aerosole mit bestem Strömungsfolgevermögen vermögen die zweimalige scharfe Strömungsumlenkung nachzuvollziehen, so, dass keine groben Schmutz- und Staubteilchen in den Abströmkanal 2 gelangen können. Von dem Abströmkanal 2 aus können daher mit Vorteil staubempfindliche Medienverbraucher wie beispielsweise die Kühlluftkanäle einer Turbinenschaufel, versorgt werden. Die groben Schmutz- und Staubteilchen sammeln sich in dem das Verlängerungselement 4 umgebenden Raum, und können über den Abströmkanal für staubbeladenes Medium 3 einer Verwendung zugeführt werden, bei der geringe Reinheitsanforderungen an das Medium gestellt werden, wie beispielsweise der Kühlung einer Gasturbinenbrennkammer. Selbstverständlich ist die Form dieses Abdeckelementes 6 nicht auf die vorliegend dargestellte Form begrenzt. Es können vielmehr auch andere, beispielsweise kegelartige Formen gewählt werden, solange die dadurch hervorzurufende Wirkung, d. h. den Eintritt von Schmutz- oder Staubpartikeln auf direktem geradlinigem Wege mit der Strömung in das Verlängerungselement zu verhindern, gewährleistet ist.

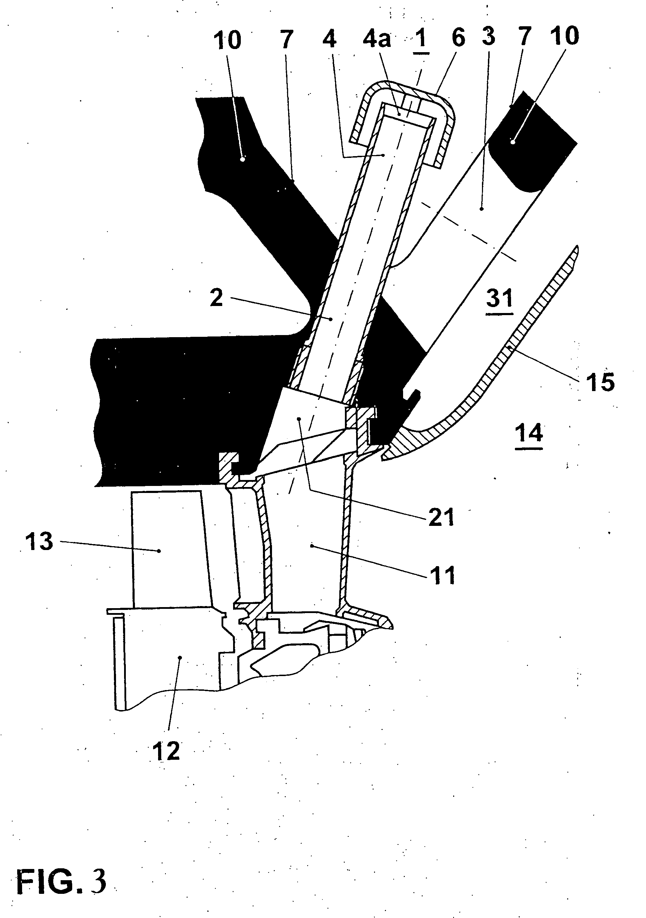

Figur 2 zeigt eine Ausführungsform die sich aufgrund der gesamthaft vergrösserten Durchtrittsquerschnitte in das Verlängerungselement 6 durch besonders geringe Druckverluste auszeichnet.

Figur 3 zeigt schließlich ein Beispiel für eine Realisierung der vorliegenden Vorrichtung im Kühlsystem einer Gasturbinenanlage. Die Figur zeigt in Querschnittsdarstellung einen Ausschnitt aus einer Gasturbinenanlage. In der Figur sind alle für das Verständnis der Erfindung nicht wesentlichen Elemente weggelassen worden. Es sind ein Teil des Gehäuses 10, der Brennkammer 14 mit der Brennkammerwand 15, eine erste Leitschaufel 11 der Turbine sowie eine Rotorscheibe 12 mit einer Laufschaufel 13 mit Bezugszeichen dargestellt. Ein im Gehäuse gebildetes Plenum fungiert dabei als Zuströmkanal 1 für Kühlluft. Ein Kühlluftkanal 21 ist zu Führung von Kühlluft zur Leitschaufel 11 vorgesehen. An diese Kühlluft werden hohe Reinheitsanforderungen gestellt, weil die Kühlluftaustrittsöffnungen einer Schaufel 11 in der Regel feinste Filmkühlungsöffnungen sind. In der in den Kühlluftkanal 31 eintretenden Kühlluft sind hingegen vergleichsweise grobe Staubbelastungen tolerierbar, weil bei der Kühlung von Breannkammerwandsegmenten 15 alle Kühlluftdurchtrittsquerschnitte recht gross dimensioniert werden. Die detaillierte Ausführung der Kühlung der Schaufeln und der Brennkammerwand ist in der Figur nicht dargestellt, jedoch dem Fachmann ohne weiteres geläufig. Der Kühlluftkanal 21 wird von einem Abströmkanal 2 angespiessen, welcher seinerseits so ausgeführt ist, dass ein Verlängerungselement 4 in das Plenum beziehungsweise den Zuströmkanal 1 hineinragt. Das Verlängerungselement 4 weist an seinem freien Ende eine stirnseitige Eintrittsöffnung 4a auf, welche gemäss der Erfindung von einem haubenförmigen Abdeckelement 6 überdeckt wird, dergestalt, dass eine geradlinige Einströmung von Kühlmittel in das Verlängerungselement 4 und den Abströmkanal 2 verhindert wird. Auf die oben beschriebene Weise ist damit sichergestellt, dass die in den Kühlkanal 21 eintretende Kühlluft keine kritische Staubbeladung aufweist. Staubbeladene Luft, welche über den bündig mit der Kanalwand 7 in dem Zuströmkanal 1 mündenden Abströmkanal 3 abgeführt wird, kann prinzipiell beliebigen Verwendungen zugeführt werden, solange die Staubbeladung für diese Verwendung unkritisch ist. So könnte diese Luft unmittelbar in die Turbine oder in die Brennkammer geleitet werden. Jedoch wurde die Kühlluft im Allgemeinen bereits stromauf des dargestellten Bereichs des Kühlsystems aufbereitet, beispielsweise grob gefiltert und gekühlt. Ein Verwerfen eines nicht unerheblichen Teilstromes ist daher negativ zu bewerten. Es ist daher dargestellt, die staubbeladene Kühlluft aus dem weiteren Abströmkanal 3 in einen Kühlkanal 31 zu leiten, von dem aus die recht staubunempfindliche Kühlung der Brennraumwand 15 mit Kühlluft versorgt wird. In der Figur ist aufgrund der Querschnittsdarstellung jeweils nur eines der Elemente, d.h. der Kanäle 2, 3, 21, und 31, Verlängerungselemente 4 oder Leitschaufeln 11 zu erkennen. Eine Vielzahl dieser Elemente bzw. Komponenten ist jedoch in an sich wohlbekannter Weise rotationssymmetrisch um die Rotorachse der Turbine angeordnet. Mit einer derartigen Ausgestaltung eines Kühlsystems lässt sich die Menge an Schmutz- und Staubpartikeln, die in die Kühlkanäle für die Hochdruckturbinenschaufeln eintreten, reduzieren und die damit verbundenen Druckverluste minimieren.

Selbstverständlich lässt sich die erfindungsgemässe Vorrichtung auch für andere, beispielweise gasförmige, Strömungen einsetzen, aus denen Partikel ausgefiltert werden sollen.

### Bezugszeichenliste

- 1: Zuströmkanal
- 2: Abströmkanal, für gereinigtes Fluid
- 3: Abströmkanal, für staubbeladenes Fluid
- 4: Verlängerungselement
- 4a: stirnseitige Einströmöffnung des Verlängerungselementes
- 5: seitliche Eintrittsöffnungen
- 6: Abdeckelement
- 6a: axiales Erstreckungselement des Abdeckelementes
- 7: Wand des Zuströmkanals
- 10: Gehäuseelement der Gasturbine
- 11: Leitschaufel
- 12: Rotorscheibe
- 13: Laufschaufel
- 14: Brennraum
- 15: Brennraumwand
- 21: Kühlluftkanal
- 31: Kühlluftkanal

## Patentansprüche

1. Vorrichtung zur Ausfilterung von Partikeln aus einer Strömung, mit einem Zuströmkanal 1) für den Einlass und wenigstens einem in den Zuströmkanal mündenden Abströmkanal (2) für den Auslass der Strömung, wobei der Abströmkanal (2) am Übergang vom Zuströmkanal (1) ein kanalförmiges Verlängerungselement (4) aufweist, das sich mit einem freien Ende in den Zuströmkanal (1) hinein erstreckt, wobei an dem freien Ende des Verlängerungselementes ein Abdeckelement (6)angeordnet ist, welches eine stirnseitige Einströmöffnung (4a) des Verlängerungselementes an der Stirnseite des freien Endes überdeckt, derart, dass eine geradlinige Einströmung in das Verlängerungselement unterbunden ist, wobei das Abdeckelement (6) haubenförmig ausgebildet ist, und das Verlängerungselement (4) axial wenigstens teilweise überdeckt,
**dadurch gekennzeichnet, dass**
das Abdeckelement (6) in axialer Richtung des Verlängerungselementes von der Stirnseite (4a) des freien Endes des Verlängerungselementes (4) stromauf beabstandet angeordnet ist.

2. Vorrichtung nach Anspruch 1
**dadurch gekennzeichnet, dass** das Verlängerungselement (4) wenigstens eine seitlich angeordnete Einströmöffnung (5) aufweist.

3. Vorrichtung nach einem der vorstehenden Ansprüche, **dadurch gekennzeichnet, dass** das Abdeckelement (6) sich axial über wenigstens eine seitlich angeordnete Einströmöffnung (5) des Verlängerungselementes (4) erstreckt.

4. Vorrichtung nach einem der vorstehenden Ansprüche,
**dadurch gekennzeichnet, dass** wenigstens ein weiterer Abströmkanal (3) angeordnet ist, welcher im Wesentlichen bündig mit der Wand des Zuströmkanals (1) in diesen mündet.

5. Vorrichtung nach einem der vorstehenden Ansprüche,
**dadurch gekennzeichnet, dass** sich das Verlängerungselement (4) um eine Distanz in den ersten Kanal (1) erstreckt, der zumindest dem Durchmesser desjenigen Abströmkanals (2) entspricht, an dem es angeordnet ist.

6. Verwendung der Vorrichtung nach einem der vorangehenden Ansprüche in einem Kühlsystem einer Strömungsmaschine, insbesondere einer Gas- und/oder Dampfturbinenanlage.

7. Verwendung nach Anspruch 6, **dadurch gekennzeichnet, dass** der wenigstens eine Abströmkanal (2) mit wenigstens einem staubempfindlichen Kühlkanal verbunden ist, und dass die ein oder mehreren dritten Kanäle (3) mit Strömungskanälen, insbesondere Kühlkanälen, verbunden sind, die gegen Staub- oder Schmutzpartikel unempfindlich sind.

8. Verwendung nach einem der Ansprüche 6 oder 7,
**dadurch gekennzeichnet,**
**dass** der wenigstens eine Abströmkanal (2) mit Kühlkanälen von Leit- oder Laufschaufeln einer Turbine in Strömungsverbindung steht.

## Claims

1. Device for the filtering out of particles from a flow, with an inflow passage (1) for the inlet of the flow, and at least one outflow passage (2) running into the inflow passage, for the outlet of the flow, wherein the outflow passage (2), at the transition from the inflow passage (1), has a passage-shaped extension element (4), which, by a free end, extends into the inflow passage (1), wherein a cover element (6) is installed on the free end of the extension element, which covers an end face inlet opening (4a) of the extension element on the end face of the free end, in such a way that a rectilineal inflow into the extension element is prevented, wherein the cover element (6) is formed in the shape of a hood, and axially at least partially covers the extension element (4),
**characterized in that** the cover element (6), in the axial direction of the extension element, is installed upstream at a distance from the end face (4a) of the free end of the extension element (4).

2. Device according to Claim 1,
**characterized in that** the extension element (4) has at least one side-disposed inlet opening (5).

3. Device according to one of the preceding claims,
**characterized in that** the cover element (6) extends axially across at least one side-disposed inlet opening (5) of the extension element (4).

4. Device according to one of the preceding claims,
**characterized in that** at least one additional outflow passage (3) is installed, which runs into the inflow passage (1), basically flush with wall of the inflow passage (1).

5. Device according to one of the preceding claims,
**characterized in that** the extension element (4) extends by a distance into the first passage (1), which corresponds at least to the diameter of that outflow passage (2) upon which it is installed.

6. Use of the device according to one of the preceding claims, in a cooling system of a turbo-engine, especially a gas- and/or steam turbine installation.

7. Use according to Claim 6,
**characterized in that** the at least one outflow passage (2) is connected to at least one cooling passage which is sensitive to dust, and **in that** the one or more third passages (3) are connected to flow passages, especially cooling passages, which are insensitive to dust or dirt particles.

8. Use according to either of the Claims 6 or 7,
**characterized in that** the at least one outflow passage (2) is in flow communication with cooling passages of stator- or rotor blades of a turbine.

## Revendications

1. Dispositif d'extraction par filtration de particules provenant d'un flux, comprenant un canal d'alimentation (1) pour l'entrée et au moins un canal d'évacuation (2) débouchant dans le canal d'alimentation pour la sortie du flux, le canal d'évacuation (2) présentant, au niveau de la transition du canal d'alimentation (1), un élément de prolongation en forme de canal (4) qui s'étend avec une extrémité libre à l'intérieur du canal d'alimentation (1),
un élément de recouvrement (6) étant prévu à l'extrémité libre de l'élément de prolongation, lequel recouvre une ouverture d'afflux (4a) du côté frontal de l'élément de prolongation au niveau du côté frontal de l'extrémité libre, de telle sorte qu'un afflux rectiligne dans l'élément de prolongation soit supprimé, l'élément de recouvrement (6) étant réalisé en forme de hotte et recouvrant axialement, au moins en partie, l'élément de prolongation (4),
**caractérisé en ce que**
l'élément de recouvrement (6) est disposé dans la direction axiale de l'élément de prolongation à distance en amont du côté frontal (4a) de l'extrémité libre de l'élément de prolongation (4).

2. Dispositif selon la revendication 1, **caractérisé en ce que** l'élément de prolongation (4) présente au moins une ouverture d'afflux (5) disposée latéralement.

3. Dispositif selon l'une quelconque des revendications précédentes, **caractérisé en ce que** l'élément de recouvrement (6) s'étend axialement sur au moins une ouverture d'afflux (5) disposée latéralement de l'élément de prolongation (4).

4. Dispositif selon l'une quelconque des revendications précédentes, **caractérisé en ce qu'**au moins un autre canal d'évacuation (3) est prévu, lequel débouche essentiellement en affleurement avec la paroi du canal d'alimentation (1).

5. Dispositif selon l'une quelconque des revendications précédentes, **caractérisé en ce que** l'élément de prolongation (4) s'étend sur une distance dans le premier canal (1) qui correspond au moins au diamètre du canal d'évacuation (2) au niveau duquel il est disposé.

6. Utilisation du dispositif selon l'une quelconque des revendications précédentes, dans un système de refroidissement d'une turbomachine, notamment d'une installation de turbine à gaz et/ou à vapeur.

7. Utilisation selon la revendication 6, **caractérisée en ce que** l'au moins un canal d'évacuation (2) est connecté à au moins un canal de refroidissement sensible à la poussière, et **en ce qu'**un ou plusieurs troisièmes canaux (3) sont connectés à des canaux d'écoulement, notamment des canaux de refroidissement, qui sont insensibles aux particules de poussière ou de saleté.

8. Utilisation selon l'une quelconque des revendications 6 ou 7,
**caractérisée en ce que** l'au moins un canal d'évacuation (2) est en liaison fluidique avec des canaux de refroidissement d'aubes directrices ou mobiles d'une turbine.
